# FASCICULE DE BREVET EUROPEEN

(11) **EP 0 419 305 B1**
(45) Date de publication et mention de la délivrance du brevet: **23.11.1994**
(21) Numéro de dépôt: 90402320.7
(22) Date de dépôt: 21.08.1990
(51) Int. Cl.: F16C 1/20

(54) **Commande à distance à lame guidée par billes dans une gaine**
Fernbedienung mit, in einer Hülle kugelgelagerten, Lamelle
Remote control with, in a sheath ball, guided blade

(30) Priorité: 21.08.1989 FR 8911074
(43) Date de publication de la demande: 27.03.1991
(73) Titulaire: CONSTRUCTIONS BREVETEES D'ALFORTVILLE, F-94140 Alfortville (FR)
(72) Inventeur: Lejeune, Robert C., F-94000 Créteil (FR)
(74) Mandataire: Hasenrader, Hubert

(56) Documents cités:
- DE-A- 1 813 800
- DE-U- 6 608 769
- DE-U- 6 608 923
- US-A- 3 667 313
- US-A- 4 075 905
- US-A- 4 787 264

## Description

La présente invention concerne une commande à distance à lame guidée par billes dans une gaine.

On connaît des documents FR-A-2 576 070 et FR-A-2 585 418 des commandes à distance comportant une lame guidée par des billes dans une gaine, permettant des déplacements axiaux de la lame dans les deux sens, avec transmission d'efforts axiaux, tout en permettant à la lame et à la gaine de décrire des trajets sinueux, entre un dispositif de commande et un dispositif commandé auxquels aboutissent les deux extrémités de la commande.

La gaine comporte intérieurement deux portées ou rails de roulement diamétralement opposés, pour le guidage et le roulement de deux séries de billes alignées de part et d'autre de la lame, cette dernière comportant également sur ses deux faces opposées des gorges de roulement coopérant avec les deux séries de billes respectivement.

Afin de maintenir les billes suivant un espacement ou pas choisi, la commande comprend deux cages à billes, une pour chaque série de billes de part et d'autre de la lame.

Les cages à billes traditionnelles, comme illustrées par exemple dans le document FR-A-2 576 070 sont malaisées à réaliser avec précision d'autant que les commandes peuvent avoir un diamètre de gaine aussi faible que quelques millimètres.

Dans certains cas, comme évoqué dans le document FR-A-2 585 418, des micro-déplacements cumulés peuvent amener l'une au moins des cages à billes en butée contre des organes fixes d'extrémité et provoquer la mise en "accordéon" de la cage à billes et le blocage complet de la commande.

Ce dernier brevet a d'ailleurs pour objet des moyens destinés à empêcher les cages à billes de se déplacer excessivement.

Le document DE-A-1 813 800 décrit une solution classique dans laquelle les cages sont réalisées en feuillard métallique, le feuillard étant nervuré entre les trous de logement pour les billes. L'expérience montre cependant que de telles cages sont sujettes aux ruptures et susceptibles de pénétrer entre les billes et leurs chemins de roulement.

Le document US-A-3 667 313, sur lequel est basé le préambule de la revendication 1, enseigne une solution dans laquelle les cages sont réalisées par des bandes de matière plastique. Elle permet certes d'éviter certains problèmes, comme notamment celui de la friction entre la cage et les organes voisins, mais compte tenu des épaisseurs recommandées dans ce document, il reste encore entre la bande et ces organes voisins un espace notable dans lequel la bande est susceptible de se mettre en "accordéon" si elle vient à être sollicitée en compression.

Ainsi, ces solutions sont délicates à réaliser et leur fiabilité en fonctionnement est toute relative.

Dans le but de pallier ces inconvénients, la présente invention consiste à prévoir que les bandes comportent des nervures saillantes sur leurs faces opposées, dont la forme épouse celle des chemins de roulement des billes dans les rails et dans la lame respectivement, et que les bandes possèdent une section complémentaire de la section libre entre la lame et le rail correspondant de manière à occuper pratiquement tout l'espace compris entre la lame et le rail respectif.

Dans la mesure où le matériau de la bande souple remplit pratiquement tout l'espace séparant la lame du rail, la bande est pratiquement empêchée de se mettre en "accordéon", évitant les désordres liés à ces phénomènes.

De plus, la bande présente une épaisseur telle, par comparaison au diamètre des billes, qu'en aucun cas des parties de la bande ne peuvent s'engager entre les billes et leurs chemins de roulement, soit côté rail soit côté lame.

En effet, ce phénomène apparaît, dans les systèmes dans lesquels la cage à billes est réalisée à partir de feuillard métallique, en cas de mise en "accordéon" de la cage, mais également en cas de rupture, à cause du fait que le feuillard présente des zones planes de faible épaisseur, non supportées correctement à l'écart de la lame et du rail, qui peuvent se déformer et venir s'engager entre les billes et leurs chemins de roulement.

Dans ce type de situation, ces systèmes classiques sont alors irrémédiablement bloqués, ce qui est particulièrement dangereux dans les applications de telles commandes à l'aéronautique notamment, et oblige à remplacer la commande entière.

Au contraire, grâce à l'invention, l'épaisseur de la bande est telle qu'en aucune zone cette bande ne peut s'engager entre les billes et leurs chemins de roulement, notamment en cas de rupture de la bande.

Selon une autre disposition, le matériau est choisi par exemple parmi les matériaux connus sous la marque "Téflon", ou encore "Rilsan", et présente donc un faible coefficient de friction tant vis-à-vis de la lame que vis-à-vis du rail, ce qui réduit notablement les forces de friction en cas de venue en butée de la cage à billes contre l'un des organes fixes d'extrémité.

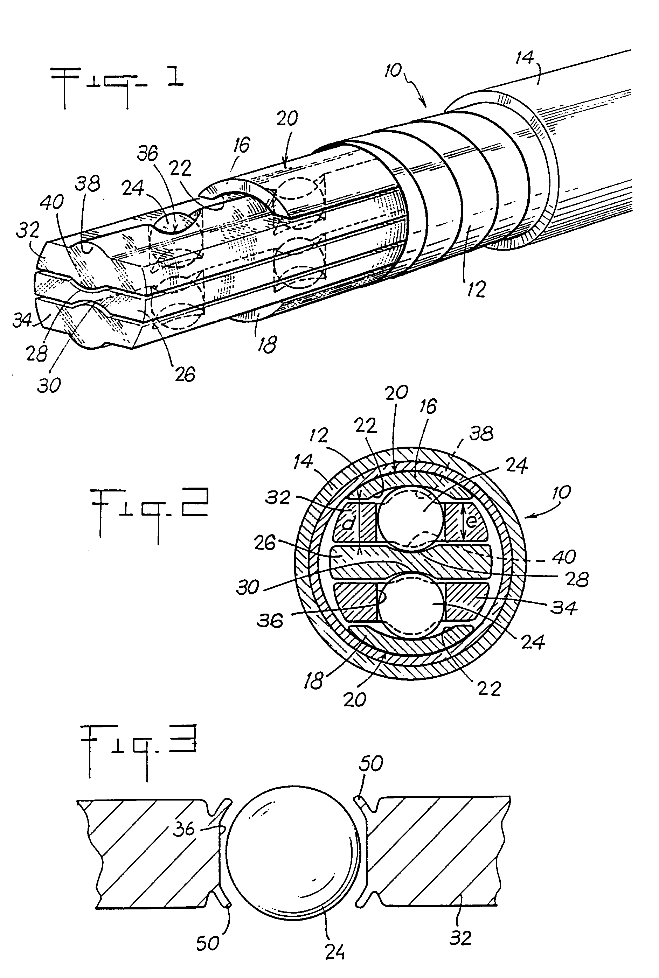

L'invention sera maintenant décrite à l'aide des dessins ci-joints, dans lesquels :
. la figure 1 est une vue en perspective partielle avec arrachements d'une commande selon l'invention, et,
. la figure 2 est une vue en coupe transversale de la commande de la figure 1,
. la figure 3 est une vue en coupe longitudinale partielle illustrant une variante.

Le dispositif de commande 10 représenté partiellement et avec arrachements à la figure 1 comprend une gaine extérieure 12 semi-rigide.

Elle se compose d'une gaine métallique capable de transmettre des efforts de traction et de compression, et susceptible de suivre des parcours sinueux ; à cet effet, la gaine métallique est avantageusement réalisée sous forme hélicoïdale.

La gaine métallique reçoit une enveloppe 14 de protection en PVC afin de la protéger à la fois contre les agressions chimiques et mécaniques, et pour éviter l'introduction de liquides et poussières vers l'intérieur de la gaine.

A l'intérieur de la gaine sont disposés deux rails 16,18 métalliques diamétralement opposés, formés dans un profilé flexible dont la section présente à l'extérieur une zone 20 en arc de cercle épousant la courbure intérieure de la gaine 12, et à l'intérieur une gorge 22 en arc de cercle formant chemin de roulement pour des billes de guidage 24 qui seront décrites ci-après.

Entre les deux rails, et dans l'axe de la gaine, la commande comprend une lame centrale flexible 26 mobile axialement dans les deux sens par rapport à la gaine 12. La lame comporte sur ses deux faces en vis-à-vis des rails, des dépressions longitudinales 28,30 à profil semi-circulaire formant également chemin de roulement pour les billes de guidage 24.

Ces billes de guidage 24 sont disposées en deux rangées, d'une part entre la lame 26 et le rail supérieur 16, comme illustré à la figure, et d'autre part entre la lame 26 et le rail inférieur 18.

Afin de maintenir les billes suivant un pas choisi, la commande comprend deux cages à billes 32,34.

Conformément à l'invention, ces cages 32,34 à billes sont réalisées sous forme de bandes en matière plastique présentant des propriétés autolubrifiantes, comme par exemple les matériaux connus sous les marques "Téflon" ou "Rilsan".

Elles ont une épaisseur e qui est légèrement inférieure à la distance d qui sépare la lame du rail en vis-à-vis, et comportent des ouvertures transversales 36 sensiblement cylindriques dans lesquelles sont logées les billes 24 de guidage, suivant le pas choisi pour les billes.

Les bandes 32,34 comportent sur leurs deux faces opposées des nervures saillantes 38,40, dont la forme épouse celle des chemins de roulement 22,28,30 de billes dans le rail 16,18 et dans la lame 26 respectivement.

Grâce à ces dispositions, la commande est simple et économique à fabriquer et à assembler, même lorsque la gaine est de très faible diamètre.

Selon la variante illustrée à la figure 3, la cage à bille s comprend des lèvres 50 annulaires légèrement rentrantes aux deux extrémités des ouvertures 36 qui reçoivent les billes 24, le diamètre intérieur des lèvres étant inférieur au diamètre des billes.

Grâce à ceci, les billes doivent être entrées légèrement à force dans leurs ouvertures et sont donc imperdables une fois entrées, ce qui simplifie notablement les opérations d'assemblage de la commande.

En fonctionnement, la commande a un rendement de transmission très élevé étant donné les très faibles frictions entre les pièces en présence.

En cas de rupture de la cage à billes 32 ou 34, ce qui se produit en général au niveau d'une bille, la cage ne présente pas dans la zone de rupture de partie de faible épaisseur non soutenue et ne risque pas par conséquent de s'engager entre la bille et ses chemins de roulement ; on évite ainsi tout risque de blocage de la commande.

Enfin, si l'une des cages se déplace progressivement jusqu'à venir en butée contre des organes terminaux, non représentés, l'élasticité propre de la matière plastique choisie permet d'encaisser les contraintes correspondantes essentiellement en direction axiale, sans fléchissement notable de la bande vers le rail ou la lame centrale, donc réduisant dans une large mesure le risque de mise en "accordéon".

Lors de la course retour de la lame centrale, il est à observer que la cage restitue l'énergie emmagasinée et reprend sa forme initiale non déformée.

De plus, toujours dans le cas de venue en butée de la cage contre des organes terminaux, à supposer que la cage subisse des fléchissements latéraux tendant à la mettre en "accordéon", on observe que dans la mesure où la bande occupe pratiquement tout l'espace compris entre la lame centrale et le rail, la bande viendra en contact avec la lame et le rail après de très faibles fléchissements latéraux, donc sans aboutir à une véritable mise en accordéon.

Les forces de contact entre la cage et le rail, et la cage et la lame resteront donc très faibles et n'engendreront pas de forces de friction appréciables.

Par ailleurs, on choisira parmi les matières plastiques convenables celles qui résistent le mieux aux basses et aux hautes températures, selon l'application envisagée. Selon les applications, on choisira des matières plastiques résistant aux produits chimiques et/ou solvants environnants. Dans les solutions antérieures avec cages métalliques, les possibilités de choix du métal étaient beaucoup plus limitées. En effet, le matériau convenable à la plupart des applications est l'acier inoxydable. C'est d'ailleurs le matériau utilisé pour la gaine métallique, les rails, la lame centrale et les billes.

Enfin, les commandes selon l'invention ne nécessitent pas de lubrification. Les matériaux plastiques autolubrifiants choisis pour réaliser les cages remplissent ce rôle. De plus, en fonctionnement, des débris minuscules de matières plastique se détachent de la bande et forment un lubrifiant à sec des parties métalliques en contact, c'est-à-dire essentiellement les zones de contact entre les billes et leurs chemins de roulement.

Des tests réalisés sur des prototypes ont permis de vérifier que les commandes conformes à l'invention fonctionnent encore normalement après 2 millions d'actionnements c'est-à-dire nettement au-delà de la limite de 1,5 million exigée par les cahiers des charges actuels en matière d'équipement aéronautique et encore mieux que la limite actuelle de 1 million constatée sur de nombreuses commandes en service.

## Revendications

1. Commande à distance (10) comportant une lame (26) guidée par des billes (24) dans une gaine (12), permettant des déplacements axiaux de la lame dans les deux sens, avec transmission d'efforts axiaux, tout en permettant à la lame et à la gaine de décrire des trajets sinueux, la gaine comportant intérieurement deux portées ou rails (16, 18) de roulement diamétralement opposés, pour le guidage et le roulement de deux séries de billes (24) alignées de part et d'autre de la lame (26), cette dernière comportant également sur ses deux faces opposées des gorges de roulement (28, 30) coopérant avec les deux séries de billes respectivement, la commande comprenant deux cages (32, 34) à billes, une pour chaque série de billes (24) de part et d'autre de la lame (26), lesdites cages à billes (32, 34) étant réalisées sous la forme de bandes en matière plastique autolubrifiante comportant des ouvertures (36) dans lesquelles sont logées les billes (24);
caractérisée en ce que lesdites bandes (32, 34) comportent des nervures saillantes (38, 40) sur leurs faces opposées, dont la forme épouse celle des chemins de roulement (22, 28, 30) des billes dans les rails (16, 18) et dans la lame (26) respectivement, et en ce que lesdites bandes (32, 34) possèdent une section complémentaire de la section libre entre la lame (26) et le rail correspondant (16, 18) de manière à occuper pratiquement tout l'espace compris entre la lame (26) et le rail (16,18) respectif.

2. Commande selon la revendication 1, caractérisée en ce que ladite matière plastique est choisie parmi le groupe de matériaux connus sous les marques "Téflon" et "Rilsan".

3. Commande selon l'une quelconque des revendications 1 ou 2, caractérisée en ce que les cages à billes comprennent des lèvres annulaires (50) rentrantes aux extrémités des ouvertures (36) de logement des billes (24).

## Claims

1. Remote drive (10) which includes a thin plate (26) guided by balls (24) in a sheath (12), enabling the thin plate to move axially in both directions, with transmission of axial forces, whilst enabling the thin plate and the sheath to describe sinuous paths, the sheath including on the inside two diametrally opposed rolling supports or rails (16, 18) for the guiding and rolling of two series of balls (24) aligned on either side of the thin plate (26), the latter also including, on both its opposite faces, rolling grooves (28, 30) interacting with the two series of balls respectively, the drive comprising two ball cages (32, 34), one for each series of balls (24) on either side of the thin plate (26), the said ball cages (32, 34) being produced in the form of strips made of self-lubricating plastic which include openings (36) in which the balls (24) are housed;
characterized in that the said strips (32, 34) include projecting ribs (38, 40) on their opposite faces, the shape of which matches that of the rolling tracks (22, 28, 30) of the balls in the rails (16, 18) and in the thin plate (26) respectively, and in that the said strips (32, 34) possess a cross-section complementary to the free cross-section between the thin plate (26) and the corresponding rail (16, 18) so as to occupy virtually the entire space lying between the thin plate (26) and the respective rail (16, 18).

2. Drive according to Claim 1, characterized in that the said plastic is chosen from the group of materials known by the "Teflon" and "Rilsan" trademarks.

3. Drive according to either of Claims 1 and 2, characterized in that the ball cages comprise re-entrant annular lips (50) at the ends of the openings (36) for housing the balls (24).

## Patentansprüche

1. Fernbedienung (10) mit einer in einer Hülle (12) durch Kugeln (24) geführten Lamelle (20), die axiale Verstellungen der Lamelle in beiden Richtungen, bei Übertragung axialer Kräfte, unter Zulassung der Beschreibung kurviger Wege durch die Lamelle und die Hülle ermöglicht, wobei die Hülle innen zwei sich diametral gegenüberliegende Wälzsitze oder -schienen (16, 18) zum Führen und Abwälzen von zwei auf beiden Seiten der Lamelle (26) angeordneten Gruppen Kugeln (24) aufweist, dabei die Lamelle ebenfalls auf ihren beiden einander abgewandten Flächen Wälznuten (28, 30) aufweist, die je mit den beiden Gruppen Kugeln zusammenwirken, die Bedienung auf beiden Seiten der Lamelle (26) zwei Kugelkäfige (32, 34), je eine für jede Gruppe Kugeln (24), aufweist, die in Form von Bändern aus selbstschmierendem Kunststoff mit Öffnungen (36), in denen die Kugeln (24) aufgenommen sind, ausgeführt sind, dadurch **gekennzeichnet,** daß
die genannten Bänder (32, 34) auf ihren einander abgewandten Flächen herausragende Rippen (38, 40) aufweisen, deren Form eng an die der Kugelwälzbahnen (22, 28, 30) in den Schienen (16, 18) bzw. in der Lamelle (26) angepaßt sind, und daß die genannten Bänder (32, 34) von einer Querschnittsform sind, die dem freien Querschnitt zwischen der Lamelle (26) und der entsprechenden Schiene (16, 18) komplementär ist, derart, daß sie praktisch den gesamten Raum zwischen der Lamelle (26) und der zugehörigen Schiene (16, 18) einnehmen.

2. Bedienung nach Anspruch 1,
dadurch **gekennzeichnet,** daß der genannte Kunststoff aus der Gruppe Werkstoffe gewählt ist, die unter den Marken "Teflon" und "Rilsan" bekannt sind.

3. Bedienung nach einem der Ansprüche 1 oder 2,
dadurch **gekennzeichnet,** daß die Kugelkäfige an den Enden der Öffnungen (36) zur Aufnahme der Kugeln (24) kreisringförmige einspringende Lippen (50) aufweisen.
